Europäisches Patentamt

European Patent Office

Office européen des brevets

(11) Veröffentlichungsnummer: **0 237 968**
**A2**

(12) # EUROPÄISCHE PATENTANMELDUNG

(21) Anmeldenummer: **87103622.4**

(51) Int. Cl.⁴: **G02B 7/00**

(22) Anmeldetag: **12.03.87**

(30) Priorität: **17.03.86 CH 1069/86**

(43) Veröffentlichungstag der Anmeldung:
**23.09.87 Patentblatt 87/39**

(84) Benannte Vertragsstaaten:
**AT CH DE FR GB IT LI NL SE**

(71) Anmelder: **CONTRAVES AG**
**Schaffhauserstrasse 580**
**CH-8052 Zürich(CH)**

(72) Erfinder: **Heller, Rudolf**
**Köschenrütistrasse 12**
**CH-8052 Zürich(CH)**

(54) **Tragvorrichtung für ein optisches Beobachtungsgerät.**

(57) Die als Stativ ausgebildete Tragvorrichtung - (100) hat eine Standsäule (20), ein schwenkbar daran gelagertes erstes Schwenksystem, ein am ersten Schwenksystem dreh-und schwenkbar gelagertes zweites Schwenksystem sowie verstellbare Gegengewichte und mehrere Dreh-und Bremslager (B1-B6) für die Dreh-und Schwenkbewegungen. Die Standsäule (20) hat einen im wesentlichen U-förmigen Querschnitt, zwischen welchen beiden Steitenteilen (22, 23) raumsparend der um eine Horizontalachse (A2) schwenkbar gelagerte Schwenkarm (30) sowie im unteren Bereich daran gelagerte L-förmiger, zur Aufnahme des ersten Gegenegwichts - (G1) ausgebildeter Lenkhebel (35) angeordnet ist. Das am ersten Schwenksystem mit einem L-förmigen Tragarm (50) angeordnete zweite Schwenksystem ist so ausgebildet, dass die verlängerte Horizontalachse (A6) sich mit der Dreh-und Schwenkachse des vorderen Bremslagers (B6) - schneidet.

FIG. 1

## Tragvorrichtung für ein optisches Beobachtungsgerät

Die Erfindung bezieht sich auf eine Tragvorrichtung für ein optisches Beobachtungsgerät, insbesondere für ein in vorbestimmtem räumlichen Bereich hinsichtlich seiner Lage und Orientierung frei stehenbleibendes Operationsmikroskop, welche Tragvorrichtung im wesentlichen eine Standsäule, ein schwenkbar an der Standsäule gelagertes, aus mehreren Teilstücken gebildetes erstes Schwenksystem sowie ein an dem ersten Schwenksystem drehbar gelagertes, aus mehreren Teilstücken gebildetes zweites Schwenksystem für das Mikroskop umfasst, wobei mittels verstellbärer Gegengewichte und mehrere Dreh-und Bremslager die Dreh-und Schwenkbewegungen beider Schwenksysteme austarierbar und arretierbar sind.

Aus der EP-PS 0 023 003 und der DE-PS 23 20 266 ist je eine als Stativ ausgebildete Tragvorrichtung für ein optisches Beobachtungsgerät, insbesondere für ein Operationsmikroskop bekannt, das exakt aus jeden Ortspunkt eines vorbestimmten Raumgebietes einstellbar ist. Diese bekannten Tragvorrichtungen umfassen im wesentlichen eine Standsäule, einen seitlich daran gelagerten Schwenkarm und einen am freien, oberen Ende des Schwenkarms angeordneten Tragarm, sowie entsprechend angeordnete Gegengewichte und mehrere Dreh-und Bremslager zur Kompensation der Schwenk-und Drehbewegungen der einzelnen Elemente, wobei das Ausschwenken und Drehen der entsprechenden Schwenk-und Tragarme einen verhältnismässig grossen Raumbedarf erfordern.

Der Erfindung liegt die Aufgabe zugrunde, durch konstruktive Massnahmen eine verbesserte Bauart der Tragvorrichtung der genannten Art zu -schaffen, mit welcher Vorrichtung bei gleicher Reichweite der Gerätebewegungen einerseits eine raum-und gewichtssparende Anordnung der einzelnen tragenden und gewichtsausgleichenden Elemente und andererseits ein baulich vereinfachter Gerätetragarm unter Beibehaltung bedienungsfreundlicher Justierung erreicht wird.

Diese Aufgabe wird nach der Erfindung dadurch gelöst, dass die um eine erste, senkrechte Achse drehbare Standsäule einen im wesentlichen U-förmigen Querschnitt aufweist, das zwischen den beiden senkrechten Standsäulen-Seitenteilen der um eine Horizontalachse schwenkbare Schwenkarm des ersten Schwenksystems ein mit dem Schwenkarm wirkverbundener Lenkhebel mit einer zur Aufnahme eines zweiten Gegengewichts ausgebildeten Schubstange wirkverbunden ist, dass an den oberen Teilstücken des Schwenkarms und der Schubstange des ersten Schwenksystems ein L-förmiger Tragarm für die Aufnahme des zweiten Schwenksystems angeordnet ist, und dass in an sich bekannter Weise das erste Schwenksystem in bezug auf die Standsäule und das zweite Schwenksystem in bezug auf das erste Schwenksystem feststellbar ist.

Die Erindung wird nachstehend in Verbindung mit der Zeichnung näher beschrieben. Es zeigt:

Fig.1 eine perspektivisch dargestellte Tragvorrichtung, und

Fig.2 eine schematisch und in kleinerem Massstab dargestellte Draufsicht auf das obere, zweite Schwenksystem der Tragvorrichtung gemäss Fig.1.

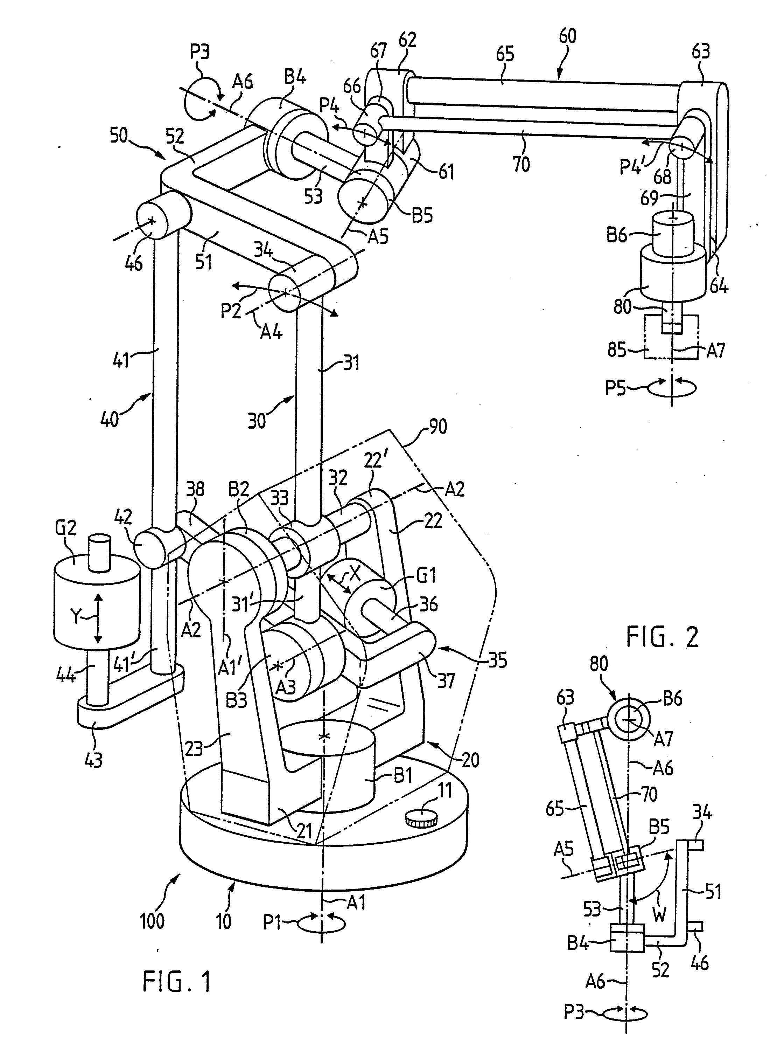

Fig.1 zeigt in perspektivischer, schematischer Darstellung eine in seiner Gesamtheit mit 100 bezeichnete Tragvorrichtung für ein optisches Beobachtungsgerät. Die Tragvorrichtung 100 ist beispielsweise als Bodenstativ für ein daran angeordnetes Operationsmikroskop 85 ausgebildet, das in vorbestimmtem räumlichen Bereich hinsichtlich seiner Lage und Orientierung frei beweglich und in jeder Stellung feststellbar ist.

Die Tragvorrichtung 100 umfasst im wesentlichen einen Stativ-Fuss 10, eine Standsäule 20, einen Schwenkarm 30, eine Schubstange 40, einen L-förmigen Tragarm 50 und ein mehrteiliges Traggestänge 60, welches am vorderen Ende zur Aufnahme und freibeweglichen Befestigung des - schematisch dargestellten Operationsmikroskópes 85 ausgebildet ist.

Bei der in Fig.1 dargestellten Tragvorrichtung 100 bilden die Teile 30,35 und 40 mit den einzelnen daran angeordneten oder wirkverbundenen Teilen ein erstes Schwenksystem sowie die an den oberen Teilstücken 31,41 der Teile 30,40 angeordneten Teile 50,60 und 70 mit den einzelnen daran angeordneten oder wirkverbundenen Teilen ein zweites Schwenksystem.

Für die Bewegung des Mikroskopes 85, beispielsweise von Hand, in die gewünschte Position sowie für die Blockierung in dieser Position, sind für die Dreh-und Schwenkbewegungen um entsprechende vertikale und horizontale Achsen A1,A2,A3,A4,A5,A6 und A7 an sich bekannte Magnet-Dreh-und Bremslager B1,B2,B3,B4,B5 und B6 vorgesehen.

Die Freigabe dieser Bremslager B1 bis B6 durch Betätigung eines beispielsweise am Mikroskop angeordneten, nicht dargestellten elektrischen Schalters ermöglicht in an sich bekannter Weise mit geringem Kraftaufwand eine Positions-und Ausrichtungsänderung des Mikroskopes 85. Die mit den Bremslagern B1 bis B6 um die Achsen A1 bis A7 dreh-und schwenkbar wirkverbundenen Teile 10,20,30, 40,50 und 60 werden nachstehend beschrieben.

Der Stativ-Fuss 20 ist vorzugsweise auf nicht näher dargestellten Rollen gelagert, so dass die eine Einheit bildende Tragvorrichtung 100 mobil und mittels am Stativ-Fuss 10 angeordneter, - schematisch dargestellter Elemente 11 am Boden nivillier-und arretierbar ist.

Die Standsäule 20 ist im wesentlichen U-förmig ausgebildet und hat ein Basisträgerteil 21 mit vorzugsweise integriertem Bremslager B1 sowie zwei im Abstand zueinander angeordnete, in bezug auf das Basisteil 21 senkrechte Seitenteile 22 und 23. Im oberen Bereich der Standsäule 20 ist in dem einen Seitenteil 23 das Bremslager B2 integriert und in dem anderen Seitenteil 22 ein nicht näher dargestelltes Lager 22' vorgesehen. In dem Bremslager B2 und dem Lager 22' ist ein die Horizontalachse A2 sowie eine zweite Vertikalachse A1' bildender Wellenkörper 32 gelagert. Der die Horizontalachse A2 sowie die zweite Vertikalachse A1' bildende Wellenkörper 32 ist in parallelem Abstand zu der ersten Vertikalachse A1 der Standsäule 20 angeordnet. Die Standsäule 20 ist in nicht näher dargestellter Weise mit dem Basisträger 21 und Bremslager B1 auf und in dem Stativ-Fuss 10 gelagert und um die erste Vertikalachse A1 in Pfeilrichtung P1 drehbar.

Der aus einem ersten Teilstück 31 und einem zweiten Teilstück 31' gebildete Schwenkarm 30 ist mit einem die beiden Teile 31,31' verbindenden Drehlager 33 zwischen den beiden Seitenteilen 22,23 der Standsäule 20 angeordnet und mit dem Wellenkörper 32 um die Horizontalachse A2 in Pfeilrichtung P2 schwenkbar. Am oberen, ersten Teilstück 31 ist ein mit dem L-förmigen Tragarm 50 in Wirkverbindung stehendes Drehlager 34 und am unteren, zweiten Teilstück 31' des Schwenkarms 30 ist das mit dem Lenkhebel 35 in Wirkverbindung stehende und im wesentlichen die Achse A3 bildende Bremslager B3 angeordnet.

Die aus einem ersten Teilstück 41 und einem zweiten Teilstück 41' gebildete Schubstange 40 ist im wesentlichen parallel zu dem Schwenkarm 30 orientiert und steht mit einem die beiden Teile 41,41' verbindenen Drehlager 42 mit dem Lenkhebel 35 in Wirkverbindung. An dem unteren Teilstück 41' ist ein Ausleger 43 und eine parallel zu dem Teilstück 41' angeordnete Stange 44 befestigt. An der Stange 44 ist ein Gegengewicht G2 feststellbar angeordnet und mit nicht näher dargestellten Mitteln in Pfeilrichtung Y stufenlos verstellbar. Die Verstellbarkeit des Gegengewichts G2 kann elektrisch oder manuell erfolgen. Am oberen Teilstück 41 der Schubstange 40 ist ebenfalls ein mit dem L-förmigen Tragarm 50 in Wirkverbindung stehendes Drehlager 46 vorgesehen.

Der zwischen den beiden Seitenteilen 22,23 der Standsäule 20 angeordnete und L-förmig ausgebildete Lenkhebel 35 ist mit dem ersten, längeren Schenkel-Teilstück 38 mit dem Drehlager 42 der Schubstange 40 sowie dem Bremslager B3 des Schwenkarms 30 wirkverbunden. An einem als Ausleger ausgebildeten, zweiten, kürzeren Schenkel-Teil stück 37 des Lenkhebels 35 ist eine parallel zum ersten Teilstück 38 orientierte Stange 36 angeordnet, auf welcher ein Gegengewicht G1 in Pfeilrichtung X stufenlos verstellbar angeordnet ist.

Der einstückig, L-förmig ausgebildete Tragarm 50 ist mit dem ersten, längeren Teilstück 51 am Drehlager 34 des Schwenkarms 30 sowie am Drehlager 46 der Schubstange 40 angeordnet und gelagert. An dem als Ausleger ausgebildeten zweiten, kürzeren Teilstück 52 des Tragarms 50 ist das Bremslager B4 angeordnet und befestigt. In dem Bremslager B4 ist in axialer Richtung ein weiterer, rohrförmiger Tragarm 53 gelagert. An dem freien Ende des Tragarms 53 ist das im wesentlichen quer zum Bremslager B4 orientierte Bremslager B5 angeordnet und befestigt.

Das im wesentlichen aus einem Tragarm 65, einem Führungsteil 70 und mehreren einzelnen Gliedern 61,62,63, 64,65,66,67,68 und 69 bestehende Traggestänge 60 ist zusammen mit dem am vorderen Ende in einem Kopf-und Kupplungsteil 80 gelagerte Mikroskop 85 um die Achse A6 des Bremslagers B4 in Pfeilrichtung P3 drehbar. Das Führungsteil (Gestänge) mit den Teilen 67,66 und 69,68 ist in bezug auf den Tragarm 65 um die im wesentlichen horizontal orientierte Achse A5 des Bremslagers B5 in Pfeilrichtung P4,P4' - schwenkbar. Der beispielsweise aus einem Rohr hergestellte Tragarm 65 des Traggestänges 60 ist mit dem einen Ende in einem ersten Lagerbock 62 und mit dem anderen Ende in einem zweiten Lagerbock 63 angeordnet, wobei der erste Lagerbock 62 an einem Lagerteil 61 und das Lagerteil 61 an dem Bremslager B5 angeordnet ist. Der zweite Lagerbock 63 weist im unteren Bereich ein teilweise dargestelltes Lagerteil 64 auf, welches mit dem Kopf-und Kupplungsteil 80 und dem Steg 69 des Führungsteils 70 in Wirkverbindung steht.

Das als Stange oder Rohr aus Leichtmetall hergestellte Führungsteil 70 hat an dem einen Ende das erste Lagerelement 66, welches an dem am Bremslager B5 befestigten Steg 67 gelagert ist. Am anderen Ende des Führungsteils 70 ist das zweite Lagerelement 68 angeordnet, das an dem zur Befestigung des Kopf-und Kupplungsteils 80 vorgesehenen Steg 69 angeordnet ist. Das an dem einen Ende mittels der Teile 67,66 mit dem Bremslager B5 und an dem anderen Ende mittels der Teile 68,69 mit dem Kupplungsstück 80 in Wirkverbindung stehende Führungsteil 70 ist in bezug auf das Traggestänge 60 im wesentlichen um die Horizontalachse A5 in Pfeilrichtung P4,P4' schwenkbar.

Das an dem Kopf-und Kupplungsstück 80 angehängte und durch ein nicht dargestelltes Kugelgelenk in an sich bekannter Weise in seiner Schwerpunktlage fixierbare Mikroskop 85 ist um die im wesentlichen vertikal orientierte Achse A7 in Pfeilrichtung P5 drehbar.

In Fig.2 ist in schematisch dargestellter Draufsicht das zweite, obere Schwenksystem dargestellt, und man erkennt den L-förmigen Tragarm 50, mit dem am längeren Teilstück 51 angeordneten Drehlagern 34,46 des ersten Schwenksystems sowie das an dem kürzeren Teilstück 52 angeordnete Bremslager B4, in welchem mit dem einen Ende der Tragarm 53 in Pfeilrichtung P3 drehbar gelagert ist. An dem anderen Ende des Tragarms 53 ist das Bremslager B5 mit seiner Achse A5 unter einem Winkel W zu der Achse A6 angeordnet, wobei der Winkel W so gewählt ist, dass die verlängerte Achse A6 sich im wesentlichen mit der der vertikalen Achse A7 des Bremslagers B6 - schneidet. Weiterhin erkennt man in Fig.2 den Tragarm 65, das Führungsteil 70 sowie das Kopf-und Kupplungsstück 80. Die an den jeweiligen Gelenkstellen der Tragvorrichtung 100 angeordneten Lager B1,B2,B3,B4,B5 und B6 sind in an sich bekannter Weise als Dreh-und Bremslager ausgebildet, und jedes einzelne Bremslager ist dabei manuell einstellbar, so dass die auf die Dreh-und/oder Schwenkbewegung der einzelnen Elemente wirkende Bremslager beliebig einstellbar ist.

An dieser Stelle sei darauf hingewiesen, dass die in Fig.1 dargestellte Standsäule 20 mit einem entsprechend ausgebildeten und den Schwenkbewegungen angepassten, nicht dargestellten Gehäuse 90 verkleidet sein kann.

**Ansprüche**

1. Tragvorrichtung für ein optisches Beobachtungsgerät, insbesondere für ein in vorbestimmtem räumlichen Bereich hinsichtlich seiner Lage und Orientierung frei stehenbleibendes Operationsmikroskop (85), welche Tragvorrichtung (100) im wesentlichen eine Standsäule (20), ein schwenkbar an der Standsäule gelagertes, aus mehreren Teilstücken gebildetes erstes Schwenksystem sowie ein an dem ersten Schwenksystem dreh-und schwenkbar gelagertes, aus mehreren Teilstücken gebildetes zweites Schwenksystem umfasst, wobei mittels verstellbare Gegengewichte und mehrerer Dreh-und Bremslager (B1-B6) die Dreh-und Schwenkbewegungen beider Schwenksysteme austarierbar und arretierbar sind, dadurch gekennzeichnet, dass die um eine erste, senkrechte Achse (A1) drehbare Standsäule (20) einen im wesentlichen U-förmigen Querschnitt aufweist, dass zwischen den beiden senkrechten Standsäulen-Seitenteilen (22,23) der um eine Horizontalachse (A2) - schwenkbare Schwenkarm (30) des ersten Schwenksystems ein mit dem Schwenkarm wirkverbundener Lenkhebel (35) sowie ein erstes Gegengewicht (G1) angeordnet und der Lenkhebel - (35) mit einer zur Aufnahme eines zweiten Gegengewichts (G2) ausgebildeten Schubstange (40) wirkverbunden ist, das an den oberen Teilstücken - (31,41) des Schwenkarms (30) und der Schubstange (40) ein L-förmiger Tragarm (50) für die Aufnahme des zweiten Schwenksystems angeordnet ist, und dass in an sich bekannter Weise das erste Schwenksystem in bezug auf die Standsäule (20) und das zweite Schwenksystem in bezug auf das erste Schwenksystem feststellbar ist.

2. Tragvorrichtung nach Anspruch 1, dadurch gekennzeichnet, dass der L-förmige Lenkhebel - (35) mit einem zwischen den beiden Standsäulen-Weitenteilen (22,23) am unteren Teilstück (31') des Schwenkarms (30) angeordneten Bremslager (B3) in Wirkverbindung steht, und dass der Lenkhebel - (35) an seinem kürzeren Teilstück (37) eine parallel zu dem längeren Teilstück (38) angeordnete Stange (36) für die Lagerung des ersten Gegengewichts (G1) aufweist.

3. Tragvorrichtung nach Anspruch 1, dadurch gekennzeichnet, dass die senkrechte Achse (A) der ersten Horizontalachse (A2) höhenversetzt in parallelem Abstand zu der ersten, senkrechten Achse - (A1) der Standsäule (20) angeordnet ist.

4. Tragvorrichtung nach Anspruch 1, dadurch gekennzeichnet, dass die in dem oberen Bremslager (B4) angeordnete Tragstange (53) und/oder das im wesentlichen quer dazu orientierte zweite Horizontalachse (A5) des Bremslagers (B5) derart unter einem Winkel (W) zueinander angeordnet sind, dass die verlängerte Achse (A6) sich mit der Dreh-und Schwenkachse (A7) des vorderen Bremslagers (B6) schneidet.

FIG. 1

FIG. 2